# EUROPEAN PATENT APPLICATION

(11) **EP 2 239 885 A1**
(43) Date of publication of application: **13.10.2010**
(21) Application number: 10159317.6
(22) Date of filing: 08.04.2010
(51) Int. Cl.: H04L 12/18

(54) **Multicast data delivery system**

(30) Priority: 10.04.2009 JP 2009095530
(71) Applicant: Hitachi Ltd., Tokyo 100-8280 (JP)
(72) Inventor: Nakahara, Naruhito, Tokyo 100-8220 (JP); Yoshimura, Manabu, Tokyo 100-8220 (JP); Du, Peng, Tokyo 100-8220 (JP)
(74) Representative: MERH-IP Matias Erny Reichl Hoffmann

(57) **Abstract**

A WiMAX system includes a delivery controller (500) having a base station information database (5022, 5024, 5025) and a regional information database (5023) in which the base station information database stores latitude/longitude information of a base station installed position and base station identification information in off-line, and a unit to specify a base station installed in a delivery desired region (I), thereby base station information of the delivery desired region is stored in the regional information database and a multicast delivery is connected to a base station alone specified by the regional information database to be able to deliver multicast data limited to a specified region.

## Description

### BACKGROUND OF THE INVENTION

The present invention relates to a multicast data delivery technique in a mobile packet communication system, and in particularly to a data delivery technique suitable to a multicast in a WiMAX (World Interoperability for Microwave Access) system.

In the mobile packet communication system, a multicast service can deliver information to a number of mobile stations by using a small radio band, therefore, it has been taken notice that a radio resource can be saved effectively. The multicast service is sometimes referred to as a multicast broadcast service. Hereinafter, the present invention includes a broadcast service when it uses the multicast service.

In the WiMAX system which is one of the mobile packet communication systems, the standardization of multicast service has been in progress as an MCBCS (MultiCast BroadCast Services) by the WiMAX forum (standard-setting organization of WiMAX).

Further, the protocol of transmission system for a MAC layer and subsequent layer has been standardized in IEEE802.16 working group (WG). The multicast service is referred to as MBS (Multicast Broadcast Service) in the IEEE802.16WG.

The multicast service in the mobile packet communication system can simultaneously deliver the same contents to a plurality of mobile stations by such a way that the mobile stations receive data transmitted from a base station by using a multicast exclusive radio channel.

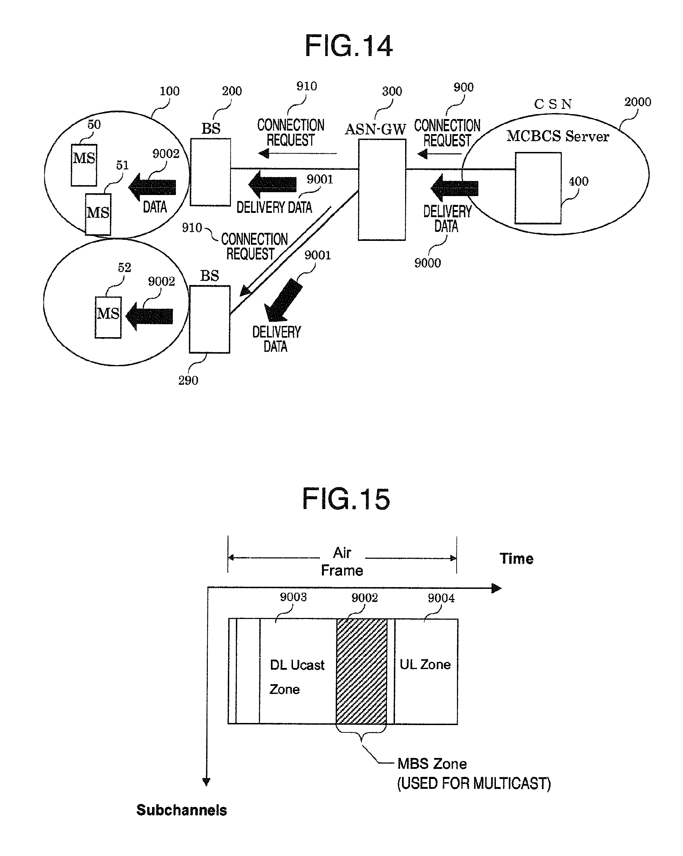

First, a configuration of the WiMAX system will be described below. Fig. 14 shows a configuration of the WiMAX system. This WiMAX system is configured by mobile stations (MS) 50, 51 and 52, base stations (BS) 200 and 290, an access service network gateway (ASN-GW) 300, and an MCBCS server 400. The MCBCS server 400 is arranged on a network referred to as a connectivity service network (CSN) 2000 to store data to be used for a multicast delivery.

The ASN-GW 300 is a device for performing a BS management, a radio resource management, an accounting and an authentication process. The ASN-GW 300 registers itself a plurality of the BSs connectable thereto.

The CSN 2000 is a network for performing a connection to an external network and a process of a high layer.

Data to be delivered by the multicast is transmitted from the MCBCS server 400 to then transfer to the BS 200 and BS 290 via the ASN-GW 300.

Fig. 15 shows a configuration of a communication frame in the WiMAX system.

The communication frame in the WiMAX system has a downlink unicast zone (DL Ucast Zone) 9003 to be used for a unicast data communication for a downstream, an MBS zone 9002 to be used for a multicast data communication, and an uplink zone 9004 to be used for a communication of an upstream, as shown in Fig. 15. The BS 200 uses the MBS zone 9002 as a multicast exclusive channel (Fig. 15) to transmit multicast data. The plurality of MSs 50, 51, 52 concurrently receive data in the MBS zone 9002 in the communication frame transmitted from the BS to thereby realize a multicast data delivery.

JP-A-2008-99291 discloses a technique relative to a multicast communication in the WiMAX system, and JP-A-2004-336318 discloses a technique for delivering regional information in the unit of cells in a mobile communication system.

The multicast data delivery in the above-mentioned WiMAX is referred to as a network trigger connection, that is, a connection request 900 is performed from the CSN 2000 to the ASN-GW 300, and a connection request 910 is also performed from the ASN-GW 300 to the BS 200 to thereby connect with a communication channel. The ASN-GW 300 transmits the connection request 910 to the BS 200 in response to the connection request 900 from the CSN 2000. The connection request 900 from the CSN 2000 to the ASN-GW 300 contains a multicast IP address of multicast contents data to be delivered. In this way, the ASN-GW 300 can therefore receive the multicast data in response to the multicast IP address indicated from the CSN 2000. The ASN-GW 300 received the connection request 900 from the CSN 2000 transmits the connection request 910 added with information of the multicast IP address to the plurality of BSs registered in the ASN-GW 300 in advance.

Multicast delivery data 9000 is transmitted from the MCBCS server 400 to then transmit to the BS 200 via the ASN-GW 300. The BS 200 receives multicast data 9001 corresponded to the multicast IP address contained in the connection request 910 from the ASN-GW 300 to transmit the multicast data 9001 to the MS 52 by using the MBS zone 9002 in the communication frame shown in Fig. 15. The MSs 50, 51 receive data contained in the MBS zone 9002 in the communication frame in Fig. 15 to thereby be able to receive the multicast data having the multicast IP address indicated by the CSN 2000. The MSs 50, 51 and 52 provide themselves with an identifier for each, referred to as an MBS zone ID, for identifying the MBS zone 9002. In consequence, the MSs 50, 51 and 52 refer to the MBS zone ID contained in the MBS zone 9002 in the communication frame delivered from the BSs 200, 290 to thereby be able to receive the data having identical ID.

As conceivable contents to be delivered by the multicast, there are a great deal of contents having a high regionality and a limited delivery desirable to a specific region, such as a forecast, disaster information, traffic information, an advertisement, event information, etc. To this end, it is required to have a scheme such that a delivery target is selected to a specific region to then perform the multicast. However, in the case of the method standardized in the WiMAX system as described in the background of the invention, there is a scheme (MBS zone ID) so that the MS identifies whether it can receive delivery data delivered from the BS at a time of receiving the delivery data. But, there is no scheme so that the delivery target of the multicast data 9001 is selected to the specific region and the multicast service is performed for the specific region alone. Since a data delivery region cannot be specified, the multicast data 9001 is delivered from BSs installed on a broad zone containing regions to which the transmission is not necessary, when performing the multicast service by the above-mentioned WiMAX system. In consequence, a reception user or the mobile stations receiving the multicast data 9001 determines whether it is necessary or unnecessary for them.

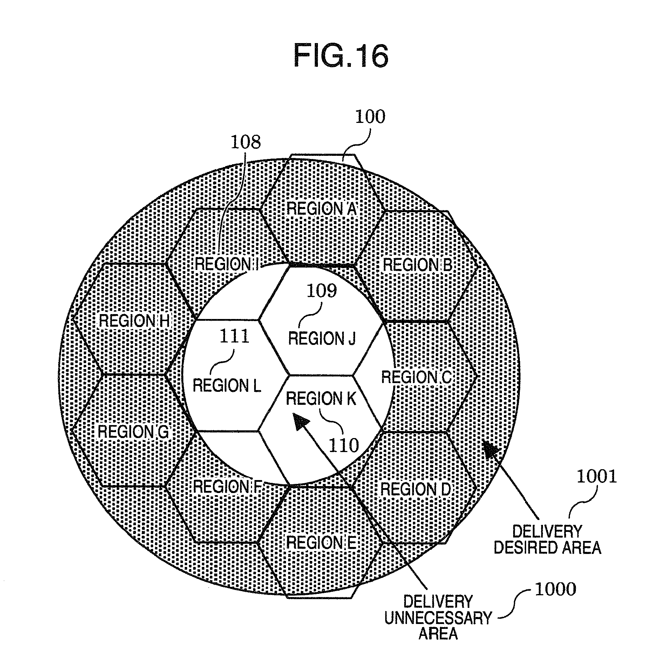

The above-mentioned condition will be described specifically with reference to Fig. 16.

Fig. 16 shows an area 100 covered by a plurality of BSs managed by the ASN-GW 300, and a cover area of one BS is indicated as one region. Here, it is assumed that contents are intended to deliver to regions A-100 to I-108 (or areas 1001 to which delivery is desirable) indicated by hatching and that contents are not intended to deliver to regions J-109 to L-111 (or areas 1000 to which delivery is not desirable) having no hatching, for example. In the above-mentioned WiMAX system, the ASN-GW 300 connects unavoidably to all of the BSs (regions A-100 to L-111 in Fig. 16) registered on the ASN-GW 300 in advance since the ASN-GW 300 does not identify the delivery region to be targeted and a positional relation between the delivery region and the BS corresponding to this delivery region. The multicast delivery data 9000 is transmitted from the MCBCS server 400 to be transferred to all of the BSs (regions A-100 to L-111) registered on the ASN-GW 300 in advance via the ASN-GW 300. These BSs deliver the multicast data 9001 by using the MBS zone 9002 described in Fig. 15. As described above, the delivered multicast data is the contents to be used for the regions, indicated by the hatching, from the regions A-100 to I-108. This multicast data could be not necessary for the MSs in the regions J-109 to L-111. In consequence, the multicast data is delivered to the regions J-109, K-110 and L-111, for which the delivery is not originally necessary to therefore consume the wasteful radio resource in the regions.

### SUMMARY OF THE INVENTION

The invention is made to solve the above-mentioned problem, and an object of the invention is to provide a multicast data delivery system capable of delivering multicast contents to a region for which the delivery is necessary in the WiMAX system.

According to an aspect of the invention, a multicast system provides a plurality of base stations, a communication device that manages the plurality of base stations registered therein and connectable with the plurality of base stations one another, a multicast server that stores multicast contents, a delivery controller that controls a delivery of the multicast contents stored in the multicast server, and an operation center that performs a control and a failure process of the above devices, in which the delivery controller includes a base station information database, a regional information database and a multicast contents information table, positional information of the base station registered in the communication device is stored in the base station database, a region in accordance with the positional information of the base station is associated with the base station positioned on the region to be stored in the regional information database in advance, the multicast contents information table includes delivery region information together with delivery time information for every multicast contents, and/or the delivery controller refers to the regional information database in accordance with the delivery time information and the delivery region information of the multicast contents in the multicast contents information table to control such that the multicast contents are delivered to the base station positioned on the region at a time in the delivery time information.

According to the invention, the multicast contents can be delivered to a specific region for which the contents delivery is necessary in the WiMAX system. A radio channel of a region necessary for delivering the multicast contents is used, but that of a region unnecessary for delivering is not used, so that an advantage for saving the radio resource can be expected.

Further, since a wasteful radio channel is not used in this case, other service channels (Unicast Service) can be assigned to an unused radio channel. It is therefore possible to make an effective good radio schedule.

The other objects, features and advantages of the invention will become apparent from the following description of the embodiments of the invention taken in conjunction with the accompanying drawings.

### BRIEF DESCRIPTION OF THE DRAWINGS

Fig. 1 is a diagram showing a configuration of the WiMAX system in a first embodiment of the invention;
Fig. 2 is a diagram showing a configuration of a delivery controller in the first embodiment;
Fig. 3 is a diagram showing a configuration of a BS in the first embodiment;
Fig. 4 is a diagram showing a connection sequence in the first embodiment;
Fig. 5 is a diagram showing an update process sequence of a BS information database in the first embodiment;
Fig. 6 is a diagram showing a broadcast program table in the first embodiment;
Fig. 7 is a diagram showing a delivery table in the first embodiment;
Fig. 8 is a diagram showing a configuration of the BS information database in the first embodiment;
Fig. 9 is a diagram showing a regional information database in the first embodiment;
Fig. 10 is a flowchart of a transmission process for BS information data in the first embodiment;
Fig. 11 is a flowchart of a connection process in the first embodiment;
Fig. 12 is a diagram showing a configuration of the BS information database in the first embodiment;
Fig. 13 is a diagram showing another configuration of the BS information database in the first embodiment;
Fig. 14 is a diagram showing a configuration of the WiMAX system;
Fig. 15 is a diagram showing a communication frame in the WiMAX system; and
Fig. 16 is a diagram showing a delivery region of a multicast broadcasting service.

### DESCRIPTION OF THE EMBODIMENTS

Hereinafter, embodiments will be described for a multicast service of the invention in the WiMAX system. The following embodiments refer to the same elements in Fig. 14, therefore, the same elements are appended to the same reference numerals.

### [First Embodiment]

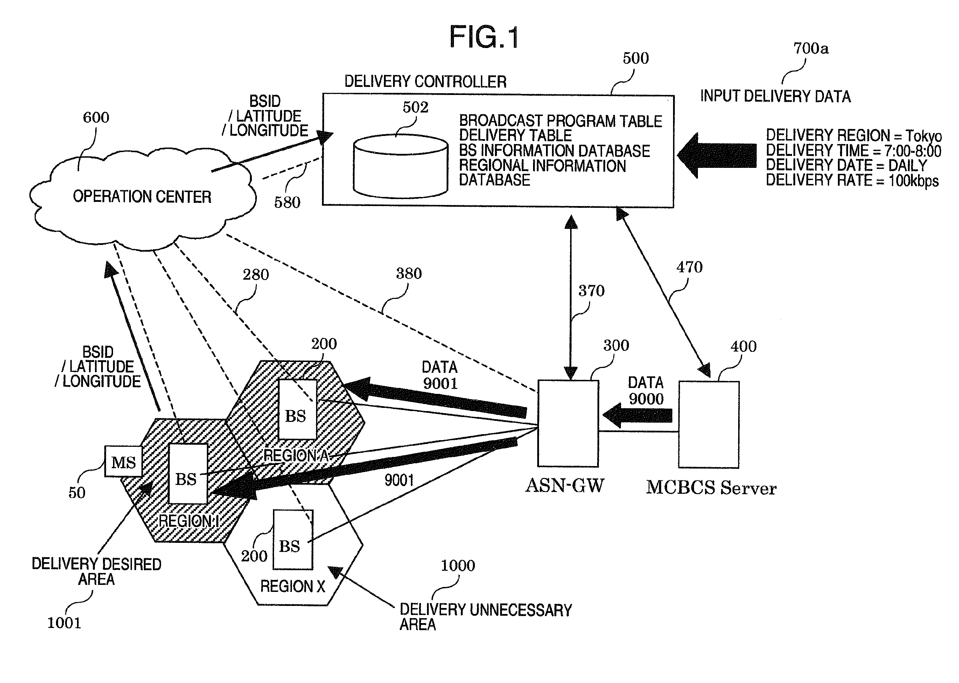

Fig. 1 is a diagram showing a configuration of a WiMAX system in a first embodiment of the invention.

As shown in Fig. 1, the WiMAX system in this embodiment is configured by a mobile station (MS) 50, a base station (BS) 200, an access service network - gateway (ASN-GW) 300, a delivery controller 500, and an MCBCS server 400. An operation center 600 is connected through an interface 280 with the BS 200, through an interface 380 with the ASN-GW 300, and through an interface 580 with the delivery controller 500, respectively, thereby to be provided for operating the above-mentioned devices and accepting a fault notification.

The delivery controller 500 provides a database 502 containing a broadcast program table, a BS information database, a regional information database, and a delivery dataset. The WiMAX multicast system in this embodiment provides the above-mentioned databases to thereby specify a delivery region and to be able to retrieve the BS corresponding to a specified region. Namely, it is possible to retrieve BSs corresponding to areas 1001 to which delivery is desirable and transmitting the multicast data only to the areas 1001 to which delivery is desirable without transmitting the multicast data only to the areas 1000 to which delivery is not desirable. The delivery controller 500 may be a stand-alone device, but incorporated in the ASN-GW 300 or MCBCS server 400, and that function may be realized therein. The delivery controller 500 is connected with the ASN-GW 300 and the delivery controller 500 is also connected with the MCBCS server 400 as indicated by reference numerals 370, 470, when the delivery controller 500 is set to as a stand-alone device. The delivery controller 500 can also be communicated with the BS 200 via the operation center 600 as indicated by reference numerals 280 and 580.

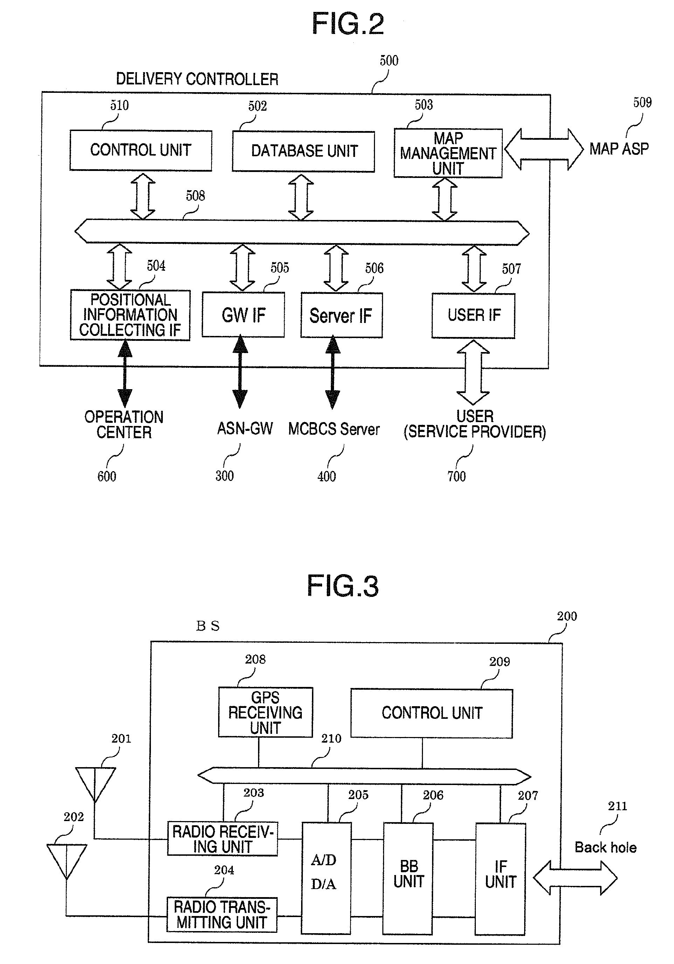

Fig. 2 is a diagram for explaining a configuration of the delivery controller 500.

The delivery controller 500 is configured by a positional information collecting IF 504 for communicating with the operator center 600, a GWIF 505 for communicating with the ASN-GW 300, a server IF 506 for communicating with the MCBCS server 400, a user IF 507 for accepting an input from a service provider 700, a map management unit 503 having an interface with a map information management or a map application service provider (map ASP) 509, a database unit 502 for storing database necessary for the broadcast program and a regionally specified delivery, and a control unit 510 for controlling the above-mentioned units. The respective units are connected by a connection bus 508 so as to communicate with each other.

Fig. 3 is a diagram for explaining a configuration of the base station or BS.

The BS 200 is configured by a receiving antenna 201, a transmitting antenna 202, a radio receiving unit 203, a radio transmitting unit 204, an A/D-D/A 205 as a conversion unit of analog/digital signal, a base band (BB) unit 206 for performing a base band process for modulation and demodulation, an IF unit 207 having a connection interface to a back hole side 211, a GPS receiving unit 208 for receiving a GPS (Global Positioning System) radio wave, and a control unit 209 for controlling the above-mentioned units. These units are connected by an internally devised bus 210. The GPS receiving unit 208 is provided for synchronizing with a clock, and the BS obtains a latitude/longitude by using the GPS receiving unit 208. Information of the latitude/longitude obtained is stored in a memory in the control unit 209. Further, a back hole indicates a line to be connected to the ASN-GW 300 and to the operation center 600.

Next, the following description will be concerned with a BS information database to be managed by the delivery controller 500.

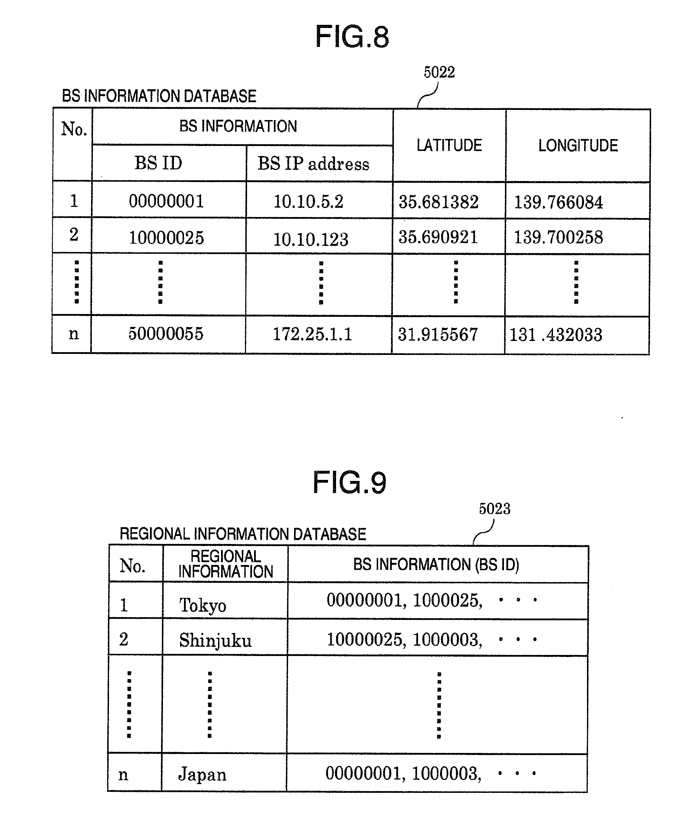

Fig. 8 is a diagram showing a configuration of a BS information database 5022.

The BS information database 5022 provided in the delivery controller 500 stores an ID of BS (BS ID) corresponding to the respective BSs, an IP address of the BS (BSIP address), and latitude/longitude information obtained from the GPS receiving unit 208 and stored in the respective BSs, obtaining via the operation center 600. A notification of the latitude/longitude information from the BS to the delivery controller 500 is performed periodically as an off-line operation at a time when a BS is newly installed, regardless of a starting request of the multicast service. A creation and update of the BS information database 5022 in the delivery controller 500 is also performed periodically as the off-line operation at a time when a BS is newly installed.

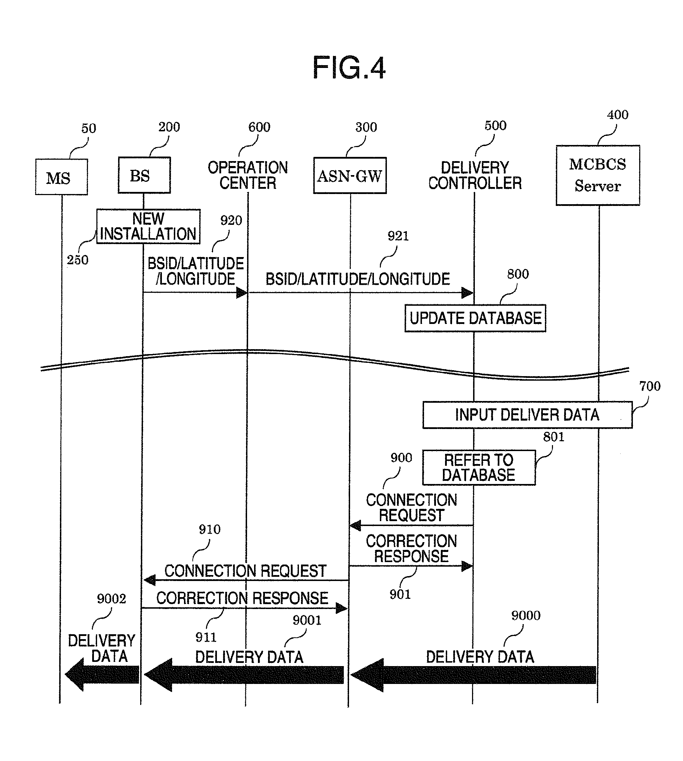

Fig. 4 is a diagram showing a sequence where the BS information database is updated at the time of creation of the BS. When a BS is installed (250), the BS 200 the latitude/longitude on the place of installing the BS is measured, the latitude/longitude information and the BSID are transmitted to the operation center 600 (920) which then transfers them to the delivery controller 500 (921). The delivery controller 500 receives the latitude/longitude information and the BSID of the newly installed BS 200 from the operation center 600 and therewith updates the BS information database (800) with those data.

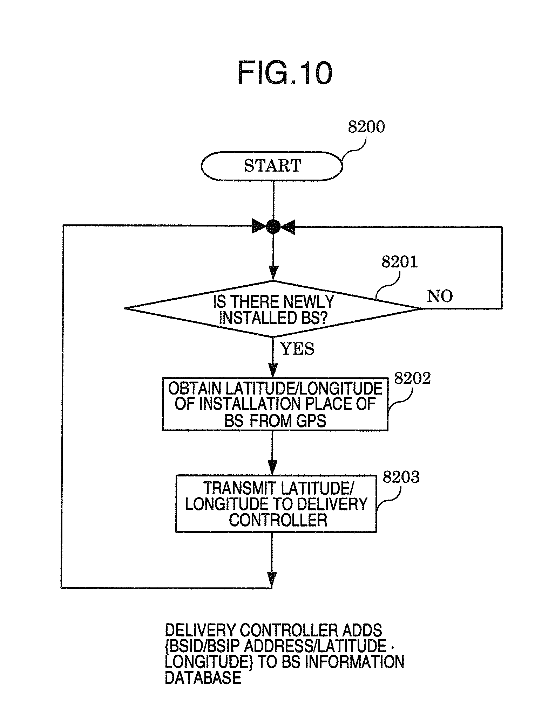

Fig. 10 is a flowchart for explaining a transmission process of BS information data sent from the BS.

Here, Fig. 10 shows a case where the BS information is notified to the delivery controller 500 as BS autonomy.

First, when turning on power at a step 8200, the BS determines whether a BS is newly installed, at a step 8201. The process proceeds to a step 8202 if it determines that the BS is newly installed. At the step 8202, the BS 200 obtains the latitude/longitude of a place, on which the BS 200 is installed, by the GPS receiving unit 208 to then store the latitude/longitude obtained in a memory of the BS by the control unit 209. Next, at a step 8203, the latitude/longitude stored is transmitted together with the BS ID to the operation center 600 through the IF unit 207.

In contrast, the operation center 600 receives the information of the latitude/longitude and the BS ID from the BS 200 to then add the IP address of the BS to the information and transfer to the delivery controller 500. The delivery controller 500 receives the information containing the latitude/longitude, the BS ID received from the BS via the operation center 600 and also the IP address of the BS added and notified to the operation center 600, to then associate the information with the BS ID and add to the BS information database 5022.

The latitude/longitude information may be transmitted directly to the delivery controller 500 from the BS 200 other than transmitted to the delivery controller 500 via the operation center 600.

Further, when the GPS receiving unit 208 is not incorporated in the BS 200, the latitude/longitude on the place of installing the BS is measured by using an externally provided GPS receiving device at a time of newly installing the BS to set the latitude/longitude as an installation parameter in the BS, in advance. Subsequently, the latitude/longitude information may be transmitted to the operation center 600 as similarly operated the flowchart shown in Fig. 10.

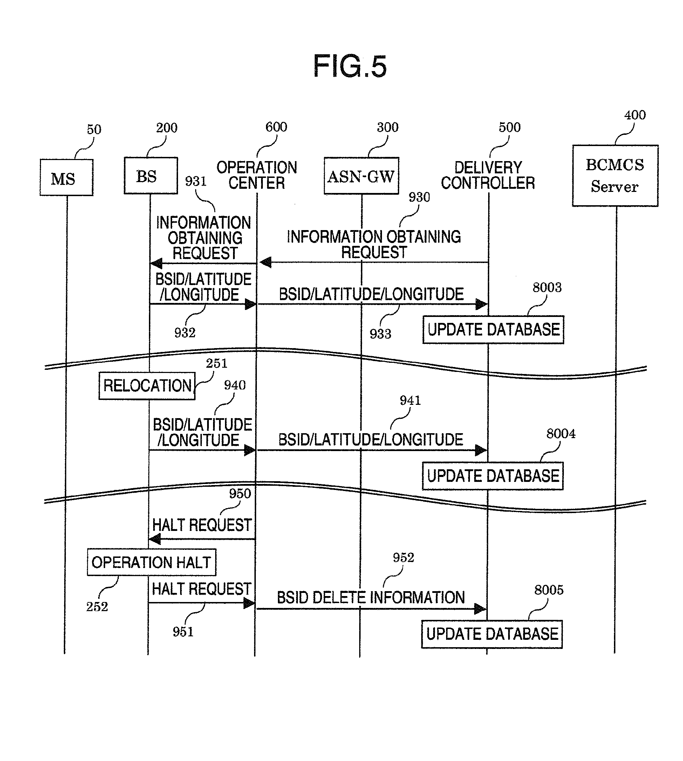

Fig. 5 shows another method of obtaining the latitude/longitude information from the BS by the delivery controller 500.

In Fig. 5, an information obtaining request 930 is transmitted to the BS 200 from the delivery controller 500 via the operation center 600. The BS 200 transmits the latitude/longitude and the BS ID to the delivery controller 500 via operation center 600 in response to receiving an information obtaining request 931. The operation center 600 transmits the latitude/longitude and the BS ID received from the BS 200 to the delivery controller 500 which updates the database on the basis of the latitude/longitude and the BS ID received (8003).

In Fig. 10, the process determines whether the BS is newly installed 250, however, at the time of relocating 251 the BS 200 with reference to Fig. 5, the BS 200 starts to provide with new process, measures, also as made in the new installation 250, the latitude/longitude on the place of relocation of the BS is measured, the latitude/longitude information and the BSID are transmitted to the operation center 600 (940) which then transfers them to the delivery controller 500 (941). The delivery controller 500 receives the latitude/longitude information and the BSID of the relocated BS from the operation center 600 and therewith updates (8004) the BS information database (8004) with those data.

Further, when the operation center 600 transfer a halt request 950 to a certain BS to place under an operation halt 252, the operation center 600, in response to a halt request response 951 from the BS, performs 952 an information deletion request for the BS ID of the operation halted BS for the delivery controller 500. The delivery controller 500 receives the information deletion request to delete 8005 information in the BS on the operation halt from the BS information database 5022. Namely, because of deletion of BS information for halted BS, a transmission of a wasteful connection request can be prevented.

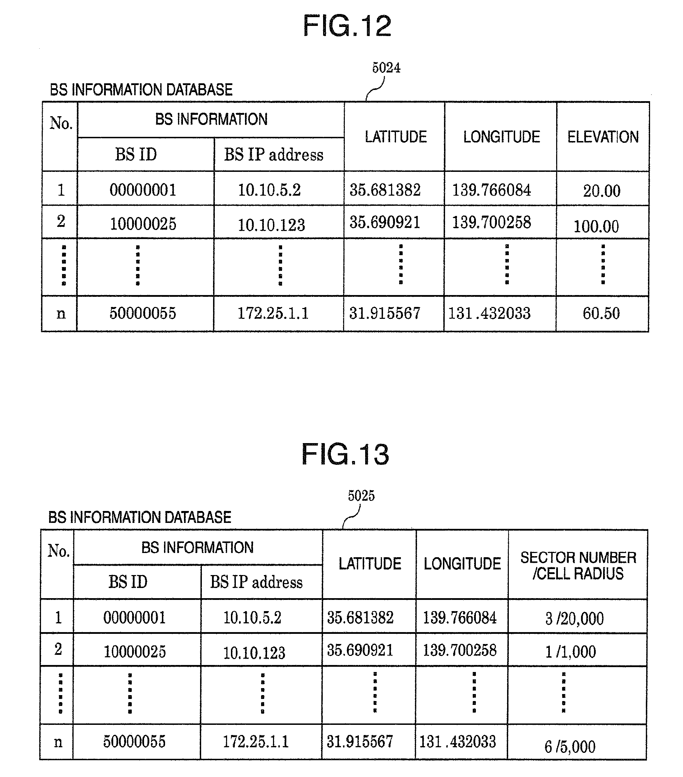

Fig. 13 shows a configuration example of another BS information database.

In Fig. 13, the BS information database 5025 contains information of a sector number and a cell radius in addition to the above-mentioned latitude/longitude. In this way, the BS information database 5025 has the information of sector number and cell radius to be able to correct the latitude/longitude by using that information, so that the BS can be made associated accurately with a region.

The BS information database 5022 creates or updates information in response to a utility work and an operation status of the BS 200, as required.

The following description will be concerned with a creation and update for a regional information database 5023.

Fig. 9 is a diagram showing a configuration example of the regional information database 5023.

The regional information database 5023 indicates that regional information (region name) is associated with the BS information (BS ID) resided in a region.

The regional information database 5023 is created and updated by the previously delivered regional input or a delivery data input 700a from the service provider 700 etc. The input and update of information are performed by an operational user (service provider 700) etc. through the user IF 507 in the delivery controller 500.

Before operating by the operational user, the delivery region entered is confirmed whether it is already registered in the regional information database 5023. If the delivery region is not registered therein, the BS resided at the latitude/longitude in the delivery region is retrieved. For a purpose of retrieving the BS, first, the latitude/longitude in the delivery region is retrieved. There are two methods for obtaining the latitude/longitude in the delivery region: one that enters map information into the map management unit 503 to then retrieve the latitude/longitude; and the other that obtains it by using an interface of the external map ASP 509. Next, the latitude/longitude in the delivery region obtained by the map management unit 503 is compared with the latitude/longitude in the BS information database 5022 in Fig. 8 to then retrieve the BS ID to be resided in a range of the latitude/longitude in the delivery region. The BS ID is an ID or identifier for identifying the BS. The BS, determined that it is resided in the range of the delivery region in accordance with the retrieved result, is added to the regional information database 5023, when completing the retrieval of BS ID. For example, when the BS to be resided in the delivery region "Tokyo" corresponds to a retrieved result indicating that BS ID is 00000001 and BS ID is 10000025, the BS is added to "1" of a column No. Further, when the BS information database 5025 in Fig. 13 is used for retrieving the BS ID, the latitude/longitude in a delivery area is corrected in consideration of the cell radius since there is the information of the sector number and cell radius in addition to the latitude/longitude, so that it is also possible to retrieve the BS ID contained in a more accurate delivery region.

In Fig. 9, a geographic name is used as regional information (or regional name), however, the operational user may set regional information other than the area corresponding to such geographic name. For example, the BS information may also be associated so as to cover a company and a store in a pinpoint manner. The regional information may also be considered that it is set to as an aggregate of the BSs spread to such an aggregate of rail stations, an aggregate of branch shops, an aggregate of schools, etc., but the BSs do not configure a certain broadening area.

Referring back to Fig. 1, the delivery controller 500 receives the delivery data 700a to create and update a broadcast program table 5020 and a delivery table 5021.

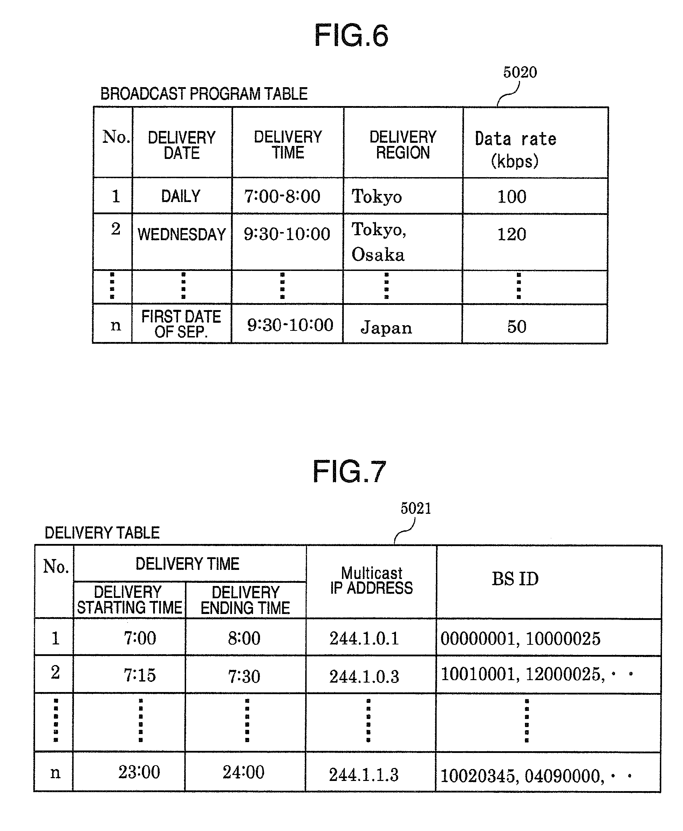

Fig. 6 shows a configuration of the broadcast program table 5020 which is confirmed by the operational user. The broadcast program table 5020 is configured by a delivery date, a delivery time, a delivery region, and a data rate, to store the above-mentioned information entered from the user IF 507.

Fig. 7 is a diagram showing a configuration of the delivery table 5021 having a multicast delivery schedule on a daily basis to be referred to a schedule for connecting or disconnecting the WiMAX multicast system. As shown in Fig. 7, the delivery table 5021 is configured by a delivery starting time, a delivery ending time, a multicast IP address, and the BS ID. The multicast IP address is an address of the delivery data 700a, and is assigned by the delivery controller 500, when a new broadcast program is added to the delivery table 5021.

A specific example will be described below.

The delivery controller 500 accepts an input containing the delivery data 700a in Fig. 1, the delivery region "Tokyo", the delivery time "7:00 to 8:00", the delivery date; daily basis, and the data rate 100 kbps to then add the accepted delivery data 700a to "1" of the column No. in the broadcast program table 5020. Next, information necessary for "1" of the column No. in the delivery table 5021 is added, at this time, the multicast IP address 224.1.0.1 is assigned. The assigned multicast IP address is notified to the MCBCS server (or contents server) 400 via the server IF 506 when terminating the above assignment. This multicast IP address may also be assigned by the service provider 700 or the MCBCS server 400. In this case, the above-mentioned assignment is notified to the delivery controller 500. The above-mentioned regional information database 5023, broadcast program table 5020 and the delivery table 5021 are created and updated by entering from the operational user. The entering may be performed at anytime if it is before the delivery time.

The following description will be concerned with a connection process of a communication line when performing the multicast data delivery.

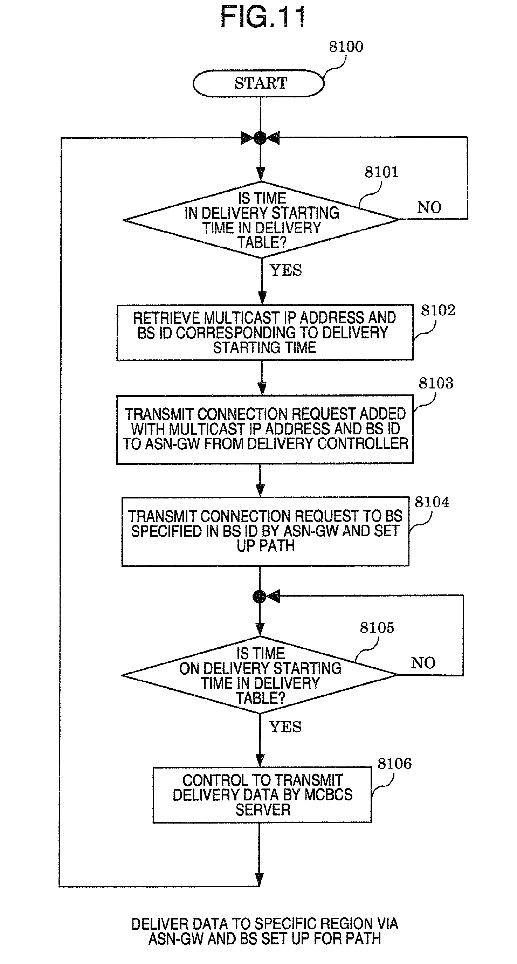

Fig. 11 is a flowchart for explaining the connection process of the communication line.

The delivery controller 500 checks the delivery table 5021 to determine whether a broadcast program, which is coming close to the delivery time, is present, at a step 8101 after starting the process at a step 8100. As a result of the determination, if a certain broadcast program is determined that it is coming close to a few minutes before the delivery starting time, the process proceeds to a step 8102. A reason why the determination is performed at a few minutes before the delivery starting time is that because the connection setting between the CSN 2000 (Fig. 14) and the ASN-GW 300 and between the ASN-GW 300 and the plural BSs is made completed in advance, before the delivery starting time.

At the step 8102, the delivery controller 500 obtains the multicast IP address and the BS ID of the delivery data 700a corresponding to the delivery time in the delivery table 5021.

The process proceeds to a step 8103 when completing the accession of information. The delivery controller 500 then transmits the connection request 900 added with the multicast IP address and the BS ID obtained by the retrieval, to the ASN-GW 300.

For example, for the delivery data 700a at 7:00 in the morning, the delivery controller 500 obtains the multicast IP address 244.1.0.1 and the BS ID 00000001, 10000025 before transmitting, to then transmit the connection request 900 to the ASN-GW 300.

The process proceeds to a step 8104 when completing the process at the step 8103. The ASN-GW 300 receives the connection request 900 from the delivery controller 500 to transfer the connection response 901 to the delivery controller and to retrieve the BS IP address (Fig. 8) corresponding to the BS ID received and transmit the connection request 910 (Fig. 4) relative to the BS IP address. The connection request 910 is added with the multicast IP address. The ASN-GW 300 can be communicated with the BS 200 by encapsulating the delivery data 700a transmitted from the MCBCS server 400 with use of the multicast IP address assigned in the ASN-GW 300. The BS 200 receives the connection request 910 from the ASN-GW 300 to then respond the connection response 911 to the ASN-GW 300, therefore, the connection for the multicast service is set up.

At a step 8105, when a time is on the delivery starting time in the delivery table 5021, the process proceeds to a step 8106 and the MCBCS server 400 controls so as to transmit delivery data 9000 of the multicast IP address corresponding to the delivery starting time to the ASN-GW 300.

The ASN-GW 300 can receive the delivery data 9000 corresponded to the multicast IP address since it has already received the multicast IP address from the delivery controller 500. The ASN-GW 300 receives the delivery data 9000 to then be transferred to the BS 200. The BS 200 can receive delivery data 9001 matched with the multicast IP address added to the connection request 900 of the ASN-GW 300. The BS 200, received the delivery data 9001, delivers it to the MS 50 by using the MBS zone 9002 (Fig. 14), and the MS 50 receives the delivery data 9001 delivered from the BS 200.

In this way, the delivery controller 500 specifies the BS 200 installed in the region to then connect to the specified BS 50 alone. Therefore, the delivery data 9000 transmitted from the MCBCS server 400 can be transferred to the specified BS 50 alone, so that the delivery service limited to a desired region can be realized by delivering the delivery data 9001 from the specified BS 200.

### [Second Embodiment]

The first embodiment is concerned with the case where delivery data is delivered to the region, however, there is a case where the BS is also installed indoors in the WiMAX system. In this case of a desired delivery region, there is a need that different delivery contents are delivered to each of the indoor floors. A second embodiment will be concerned with a delivery system in relation to a condition where an elevation is added to the delivery region and the number of floors is also limited.

Fig. 12 is a diagram showing a configuration of a BS information database 5024 to be used for the WiMAX system in the second embodiment.

The second embodiment has an aspect of adding elevation information to the BS information database 5022 in Fig. 8.

In the second embodiment, the configuration of WiMAX system is the same as that in the first embodiment.

The BS 200 receives the elevation information in addition to the latitude/longitude received from the GPS receiving unit 208. Likewise of the first embodiment, the BS 200 transfers the elevation information in addition to the latitude/longitude and BS ID to the delivery controller 500 via operation center 600.

The delivery controller 500 stores the information, relative to the BS, received from the operation center 600, in the BS information database 5024 in Fig. 12.

Next, the update for the regional information database 5023 is performed by the following procedure. First, the BS ID to be resided in the range of the latitude/longitude in the desired delivery region in the first embodiment is retrieved by using the BS information database 5024, the BS ID to be resided in an elevation range (calculated from the number of floors in a building) in the desired delivery region is further searched, and the BS ID matched with a three-dimensional space in the latitude/longitude/elevation is retrieved to then add to and update the regional information database 5023. Other operations are performed by the same configuration in the first embodiment, that is, the ASN-GW 300 is connected with the BS 200, and the delivery data 9000 transmitted from the MCBCS server 400 is delivered through the ASN-GW 300 and the BS 200.

The connected BS can perform the contents delivery to each of the floors in the building since it is connected discriminately to the BS installed in every floor of the building.

In the invention, a different multicast service can be provided for each of the indoor installed BSs in every floor of the building since the elevation is considered, so that the radio band to be used for the limited multicast can also be used effectively.

The system configuration in Fig. 1 respectively shows a single unit for each of the ASN-GW 300 and MCBCS server 400, however, plural units for each of the ASN-GW 300 and MCBCS server 400 may be acceptable. In this case, the delivery controller 500 creates the BS information database 5022 for every ASN-GW 300 to then manage this database. Other configuration and process flow are the same as these in the above-mentioned embodiment.

It should be further understood by those skilled in the art that although the foregoing description has been made on embodiments of the invention, the invention is not limited thereto and various changes and modifications may be made without departing from the spirit of the invention and the scope of the appended claims.

Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

## Claims

1. A multicast system including a plurality of base stations (200), a communication device (300) that manages the plurality of base stations registered in the communication device as connectable with the plurality of base stations one another, a multicast server (400) that stores multicast contents, a delivery controller (500) that controls a delivery of the multicast contents stored in the multicast server, and an operation center (600) that performs a control and a failure process of the above devices, wherein
the delivery controller includes a base station information database (5022, 5024, 5025), a regional information database (5023) and a multicast contents information table (5020, 5021),
positional information of the base station registered in the communication device is stored in the base station database, and a region (A, I, X) in accordance with the positional information of the base station is associated with the base station positioned on the region to be stored in the regional information database, in advance,
the multicast contents information table includes delivery region information together with delivery time information for every multicast contents, and
the delivery controller refers to the regional information database in accordance with the delivery time information and the delivery region information of the multicast contents in the multicast contents information table to control such that the multicast contents are delivered to the base station positioned on the region at a time in the delivery time information.

2. The system according to claim 1, wherein the base station (200) includes a GPS receiving unit (208) to obtain a latitude/longitude and a unit to transmit the latitude/longitude obtained to the operation center (600).

3. The system according to claim 2, wherein the operation center transmits latitude/longitude information to the delivery controller (500) at a timing when the latitude/longitude information transmitted from the plurality of the base station (200,210) is transmitted to the operation center.

4. The system according to claim 2 or 3, wherein the delivery controller (500) transmits an information obtaining request to the plurality of base stations (200) via the operation center, and the plurality of base stations obtain the latitude/longitude from the GPS receiving unit in response to the information obtaining request to transmit to the delivery controller via operation center.

5. The system according to claim 2, 3 or 4, wherein the base station obtains the latitude/longitude from the GPS receiving unit at a timing when an operation is restarted after a condition where the base station is set in a new installation, a relocation or an operation halt, to transmit the latitude/longitude of the base station to the delivery controller (500) via the operation center.

6. The system according to at least one of claims 2 to 5, wherein the base station (200) further includes a unit that obtains an elevation, and the base station information database (5022, 5024, 5025) stores information of the elevation in addition to the latitude/longitude as positional information of the base station registered on the communication device (300), and the regional information database (5023) stores the region (A, I, X) and the base station associated with the region in accordance with the information of the elevation in addition to the latitude/longitude of the base station.
